# FASCICULE DE BREVET EUROPEEN

(11) **EP 4 411 178 B1**
(45) Date de publication et mention de la délivrance du brevet: **14.01.2026**
(21) Numéro de dépôt: 24155142.3
(22) Date de dépôt: 31.01.2024
(51) Int. Cl.: F16H 57/08, F02C 7/36, F16H 1/28, F16H 55/17, F16H 57/04

(54) **TURBOMACHINE COMPRENANT UN REDUCTEUR DE VITESSE AYANT DES BRIDES DE FIXATION ACCOUPLEES PAR UN ACCOUPLEMENT A DENTURES**
STRÖMUNGSMASCHINE MIT EINEM DREHZAHLMINDERER MIT DURCH EINE ZAHNKUPPLUNG GEKOPPELTEN BEFESTIGUNGSFLANSCHEN
TURBOMACHINE COMPRISING A SPEED REDUCER HAVING FIXING FLANGES COUPLED BY A GEAR COUPLING

(30) Priorité: 06.02.2023 FR 2301107
(43) Date de publication de la demande: 07.08.2024
(73) Titulaire: Safran Transmission Systems, 92700 Colombes (FR)
(72) Inventeur: PELTIER, Jordane Emile André, 77550 MOISSY-CRAMAYEL (FR); MORELLI, Boris Pierre Marcel, 77550 MOISSY-CRAMAYEL (FR); PTASZYNSKI, Patrice Julien, 77550 MOISSY-CRAMAYEL (FR); TUNE, Pierre-Damien, 77550 MOISSY-CRAMAYEL (FR)
(74) Mandataire: Gevers & Orès

(56) Documents cités:
- DE-A1- 102008 035 155
- US-A1- 2018 038 448

## Description

### Domaine de l'invention

La présente invention concerne le domaine général de l'aéronautique. Elle vise en particulier un réducteur mécanique de vitesse avec des brides de fixation accouplées au moins par un accouplement à dentures.

### Arrière-plan technique

L'art antérieur comprend les documents US-B1-2018038448 et DE-A1-102008035155.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelée fan). De manière usuelle, le réducteur de vitesse a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou compound.
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

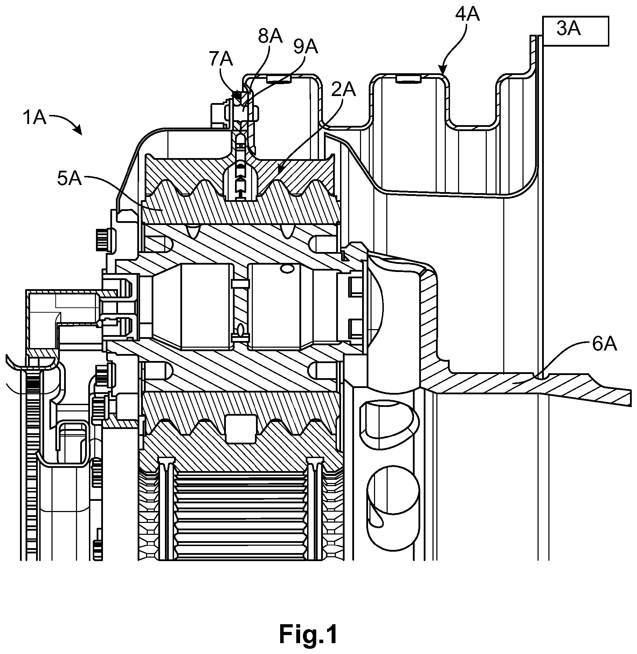

La figure 1 représente un réducteur de vitesse 1A avec un engrenage de type épicycloïdal. Le réducteur de vitesse 1A comprend une couronne 2A qui est fixe et qui est reliée à un carter fixe ou stator 3A de la turbomachine via un porte-couronne 4A. Le réducteur de vitesse 1A comprend des satellites 5A qui entraînent en rotation un porte-satellite 6A. Ce dernier est fixé à l'arbre de soufflante et est mobile en rotation autour de l'axe longitudinal de la turbomachine. La couronne 2A comprend une première bride de fixation 7A s'étendant radialement vers l'extérieur et fixée à une deuxième bride de fixation 8A du porte-couronne 4A grâce à une liaison boulonnée. Les brides de fixation 7A, 8A comprennent chacune une surface et ces surfaces sont plaquées l'une contre l'autre par les vis 9A de la liaison boulonnée.

Le passage du couple est réalisé par friction entre ces surfaces et est limité à iso-diamètre d'implantation. L'augmentation du diamètre des brides de fixation peut être une solution pour augmenter la capacité de passage du couple. Toutefois, d'une part, le nombre de vis à implanter sur ces brides peut être limité et d'autre part, cela pourrait impacter directement le diamètre du réducteur de vitesse et l'intégration de ce dernier dans un espace déjà restreint de la turbomachine. Par ailleurs, le porte-couronne 4A comprend un col de cygne qui peut entraver l'accès aux vis de la liaison boulonnée.

De plus, le porte-couronne peut comprendre des soufflets pour centrer la couronne et pour relier la couronne 2A au carter de manière à limiter les surcharges dues aux déplacements et désalignement de différents organes dans la turbomachine. Le porte-couronne est ainsi complexe à fabriquer et l'assemblage peut être fastidieux.

Il existe un besoin de résoudre tout ou partie des inconvénients précités.

### Résumé de l'invention

L'objectif de la présente invention est de fournir une solution simple et économique permettant d'augmenter la capacité de transmission d'un couple vers le stator de la turbomachine.

Nous parvenons à cet objectif conformément à l'invention grâce à un réducteur de vitesse pour une turbomachine, en particulier pour aéronef, présentant un axe longitudinal X, le réducteur de vitesse comprenant un pignon solaire, des pignons satellites, une couronne externe, et un porte-couronne fixé à la couronne externe, les pignons satellites étant en prise d'une part avec le pignon solaire et d'autre part avec la couronne externe, et la couronne externe comportant une première bride fixation s'étendant radialement vers l'extérieur et étant fixée à une deuxième bride de fixation du porte couronne par des organes de fixation, la première bride de fixation et la deuxième bride de fixation formant un ensemble de fixation et en ce que l'ensemble de fixation comprenant au moins un accouplement à dentures par dents axiales d'accouplement comprenant une première série de dents axiales d'accouplement destinées à s'engager avec une deuxième série de dents axiales d'accouplement complémentaires, les organes de fixation étant agencés de manière à serrer entre elles les première et deuxième brides de fixation et maintenir circonférentiellement chaque dent de la première série de dents axiales d'accouplement entre deux dents de la deuxième série de dents axiales d'accouplement complémentaires.

Ainsi, cette solution permet d'atteindre l'objectif susmentionné. En particulier, cet accouplement permet un passage de couple important (augmentation de l'ordre de 50%) sur des diamètres moyens élevés. Le passage du couple est réalisé par friction entre les dents qui fournissent des surfaces de contact plus importantes. De plus, la fixation des brides de fixation par des organes de fixation permet d'appliquer un effort axial requis dans ce genre d'accouplement pour plaquer au moins les deux brides de fixation. L'accouplement à dentures permet une réduction des organes de fixation de l'ordre de 90% ce qui implique un gain en masse et un montage simplifié. La fiabilité d'une telle configuration est accrue.

Des modes particuliers de réalisation de l'invention sont définis dans les revendications dépendantes divulguant les caractéristiques suivantes, prises seules ou en combinaison :
- la couronne externe est formée d'une demi-couronne avant et d'une demi-couronne arrière, la demi-couronne avant comprenant une demi-bride radiale avant et la demi-couronne arrière comprenant une demi-bride radiale arrière, la demi-bride radiale avant et la demi-bride radiale arrière formant la première bride de fixation, la demi-bride radiale arrière de la demi-couronne arrière étant reliée à la deuxième bride de fixation par un accouplement à dentures par dents axiales d'accouplement, la demi-bride radiale arrière de la demi-couronne arrière comprenant la première série de dents axiales d'accouplement et la deuxième bride de fixation comprenant la deuxième série de dents axiales d'accouplement complémentaires.
- la couronne externe est formée d'une demi-couronne avant et d'une demi-couronne arrière, la demi-couronne avant comprenant une demi-bride radiale avant et la demi-couronne arrière comprenant une demi-bride radiale arrière, la demi-bride radiale avant et la demi-bride radiale arrière formant la première bride de fixation, les demi-brides radiales avant et arrière étant reliées entre elles par un accouplement à dentures par dents axiales, une des demi-brides radiales avant et arrière comprenant la première série de dents d'accouplement axiales et l'autre des brides radiales avant et arrière comprenant la deuxième série de dents d'accouplement axiales complémentaires.
- la première bride de fixation et la deuxième bride de fixation comprennent respectivement des premiers et deuxièmes orifices de fixation axiaux traversés par les organes de fixation, les premiers et deuxièmes orifices de fixation axiaux étant agencés circonférentiellement autour de l'axe longitudinal.
- les organes de fixation comprennent des vis axiales ou des boulons axiaux traversant les premiers et deuxièmes orifices de fixation.
- plusieurs dents de la première ou deuxième série de dents axiales d'accouplement sont agencées entre deux premiers ou deuxième orifices de fixation circonférentiellement adjacent autour de l'axe longitudinal, le nombre de premiers ou deuxièmes orifices de fixation étant compris entre 5 et 10.
- le porte couronne comprend un soufflet.
- la première bride et la deuxième bride comprennent chacune des dents axiales de fixation qui sont traversées par les orifices de fixation destinés à recevoir des organes de fixation.
- les dents axiales de fixation présentent, d'une part, une hauteur de dent mesurée radialement vis-à-vis de l'axe longitudinal, et d'autre part, une largeur de dent mesurée dans une direction transverse à la hauteur de dent, la largeur de chacune des dents axiales de fixation étant supérieure à la largeur de dent des dents axiales d'accouplement.
- les dents axiales d'accouplement s'étendent sur toute la hauteur radiale des première et deuxième brides de fixation.
- une des demi-couronnes avant et arrière comprend une patte s'étendant suivant l'axe longitudinal et destinée à être logée dans un évidement de forme complémentaire de l'autre des demi-couronnes avant et arrière.
- l'ensemble de fixation comprend des perçages ou trous destinés aux évacuations du lubrifiant et des organes de fixations entre les pièces.

L'invention concerne également une turbomachine, en particulier pour aéronef, présentant un axe longitudinal X et un réducteur de vitesse tel que susmentionné. Selon un mode particulier de réalisation, la couronne est reliée à un carter de la turbomachine et est immobile en rotation par rapport à l'axe longitudinal. Selon un autre mode particulier de réalisation, la couronne est reliée à un arbre de la turbomachine et est mobile en rotation autour de l'axe longitudinal.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 représente un réducteur mécanique d'une turbomachine selon l'art antérieur ;
La figure 2 représente un exemple de turbomachine selon l'invention ;
La figure 3 est une vue de détails d'un exemple de réducteur de vitesse selon l'invention ;
La figure 4 représente en perspective, un exemple d'accouplement entre deux organes d'un réducteur de vitesse selon l'invention ;
La figure 5 est une vue en perspective d'un exemple de couronne selon l'invention ;
La figure 6 est une vue en perspective d'un exemple de porte-couronne selon l'invention ;
La figure 7 est une vue en coupe axiale au niveau d'un accouplement à dentures entre une couronne et un porte-couronne selon l'invention ;
La figure 8 est une vue en coupe axiale au niveau d'une liaison boulonnée entre une couronne et un porte-couronne selon l'invention ;
La figure 9 est une vue en perspective d'un autre mode de réalisation d'un accouplement à dentures entre des brides d'un organe d'un réducteur de vitesse selon l'invention ;
La figure 10 est une vue en perspective et de détails de la figure 9 ;
La figure 11 est une vue en coupe axiale d'un autre mode de réalisation d'un accouplement entre deux organes de réducteur de vitesse et de la turbomachine selon l'invention ;
La figure 12 représente en perspective l'engagement des dents de l'accouplement suivant la figure 11 ;
La figure 13 est une vue en perspective et de détails de la figure 12.

### Description détaillée de l'invention

La figure 1 montre une vue en coupe axiale d'un réducteur mécanique de vitesse destiné à équiper une turbomachine et qui a déjà été décrit précédemment.

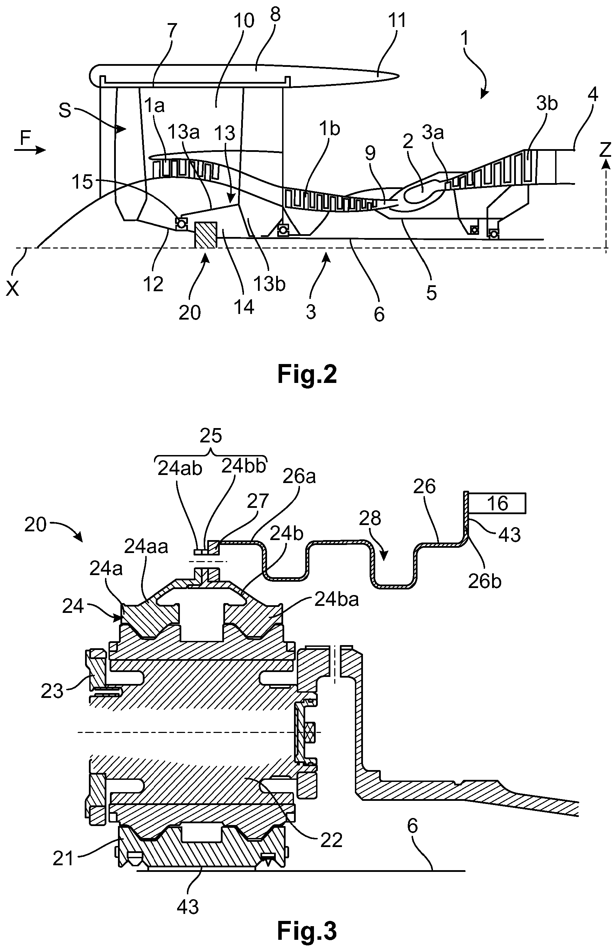

La figure 2 représente une turbomachine 1 d'axe longitudinal X. La turbomachine 1 illustrée est une turbomachine 1 double flux destinée à être montée sur un aéronef. Bien entendu, la turbomachine peut être un turboréacteur simple flux ou encore peut être un turbopropulseur équipé d'une seule hélice non carénée ou d'un doublet d'hélices contrarotatives, non carénées, et connus sous l'expression anglaise « open rotor ». L'invention peut s'appliquer à d'autres domaines dans lesquels un réducteur mécanique de vitesse est employé.

Dans la présente invention, les termes « amont » et « aval » sont définis par rapport à la circulation des gaz dans la turbomachine et ici suivant l'axe longitudinal X et à la figure 1 de gauche à droite.

La turbomachine 1 comporte, de manière classique et, d'amont en aval, une soufflante S, un compresseur basse pression 1a, un compresseur haute pression 1b, une chambre annulaire de combustion 2, une turbine haute pression 3a, une turbine basse pression 3b et une tuyère d'échappement 4. Le compresseur haute pression 1b et la turbine haute pression 3a sont reliés par un arbre haute pression 5 et forment avec lui un corps haute pression (HP). Le compresseur basse pression 1a et la turbine basse pression 3b sont reliés par un arbre basse pression 6 et forment avec lui un corps basse pression (BP).

La soufflante S est carénée par un carter de soufflante 7 portée par une nacelle externe 8. La soufflante S génère, à partir d'un flux d'air F entrant dans la soufflante, un flux d'air primaire qui circule dans une veine primaire 9 débouchant dans la tuyère d'échappement 4 et un flux d'air secondaire qui circule dans une veine secondaire 10, autour de la veine primaire 9, débouchant dans une tuyère d'éjection 11.

La soufflante S est entraînée par un arbre de soufflante 12 qui est entrainé à l'arbre basse pression 6 par exemple au moyen d'un réducteur 20. Ce dernier est généralement de type planétaire ou épicycloïdal.

Dans le présent mode de réalisation, la turbomachine est équipée d'un réducteur de vitesse 20 formé d'un train d'engrenage et connu sous l'acronyme anglais RGB pour « Reduction Gear Box ».

Le réducteur 20 est positionné dans la partie amont de la turbomachine suivant la circulation des gaz de la turbomachine. Une structure fixe 13 comportant schématiquement, ici, une partie amont 13a et une partie aval 13b, compose le carter moteur 16 ou stator est agencée de manière à former une enceinte 14 entourant le réducteur 20. Le carter moteur 16 peut être par exemple le carter d'entrée de la turbomachine. Un brouillard de lubrifiant règne dans l'enceinte 14. Cette enceinte 14 est de manière avantageuse mais non limitativement fermée en amont par des joints au niveau d'un palier amont 15 permettant la traversée de l'arbre de soufflante 12, et en aval par des joints au niveau de la traversée de l'arbre basse pression 6.

En référence à la figure 3, le réducteur de vitesse 20 est ici du type épicycloïdal. Ce dernier comprend trois composants que sont un pignon solaire 21, des pignons satellites 22 et un porte-satellites 23 qui sont mobiles en rotation. La vitesse de rotation de l'un de ces composants dépend notamment de la différence de vitesses des deux autres composants.

En entrée, le réducteur 20 est relié à l'arbre basse pression 6, par exemple par l'intermédiaire de cannelures 39. Ces dernières s'étendent de manière avantageuse parallèlement à l'axe longitudinal X. Ainsi l'arbre basse pression 6 entraîne le solaire 21 (ou planétaire interne). Classiquement, le solaire 21, dont l'axe de rotation est confondu avec celui de l'axe longitudinal X de la turbomachine, entraîne les satellites 22, qui sont équirépartis sur le même diamètre autour de l'axe longitudinal de rotation X. Ce diamètre est égal au double de l'entraxe de fonctionnement entre le solaire et les satellites. Le nombre de satellites est généralement défini entre trois et sept pour ce type d'application.

De manière avantageuse, le solaire 21 est solidaire en rotation de l'arbre basse pression 6 et le porte-satellites 23 est solidaire en rotation de l'arbre de soufflante 12.

L'ensemble des satellites 22 est maintenu par un châssis appelé porte-satellites 23. Chaque satellite 22 tourne autour de son propre axe. Chaque satellite 22 engrène avec une couronne externe 24 (ou planétaire externe).

La couronne externe 24 est fixe ou immobile en rotation par rapport à l'axe longitudinal X.

En sortie, l'ensemble des satellites 22 entraine en rotation le porte-satellites 23 autour de l'axe X de la turbomachine. La couronne externe 24 est fixée à un carter de la turbomachine ou stator (tel que le carter 16) via un porte-couronne 26 décrit ultérieurement. Le porte-satellites est fixé et solidaire en rotation de l'arbre de soufflante 12.

Suivant une alternative non représentée, le réducteur de vitesse 20 comprend un engrenage de type planétaire. Dans ce cas, l'entrée du réducteur de vitesse 20 est couplée à l'arbre basse pression 6 tandis que la sortie du réducteur de vitesse 20 est couplée à l'arbre de soufflante 12. En particulier, la couronne externe 24 est solidaire en rotation de l'arbre de soufflante 12 autour de l'axe longitudinal X. Les satellites, par exemple au nombre de cinq, sont portés par le porte-satellites 23 qui est dans ce cas monté fixe. Le porte-satellites 23 est solidaire du carter 16. De la sorte, les satellites 22 présentent chacun des dents qui engrènent avec celles du pignon solaire 21, sous la forme d'une roue dentée, et avec la couronne externe 24 munie de dentures internes. En fonctionnement, le pignon solaire 21 est entraîné en rotation par l'arbre basse pression 6 suivant une première vitesse de rotation. Les satellites 22 sont entraînés en rotation par le pignon solaire 21 autour de leur axe suivant une deuxième vitesse de rotation. La couronne externe 24 qui engrène avec les satellites 22 est entraînée en rotation autour de l'axe longitudinal X et entraîne l'arbre de soufflante 12. La couronne externe 24 tourne suivant une troisième vitesse de rotation et dans un sens opposé à celui du pignon solaire 21.

Dans le cas du réducteur de type planétaire ou épicycloïdale, chaque satellite 22 est monté libre en rotation à l'aide de palier (non représenté), par exemple de type roulement ou palier hydrodynamique. De manière générale, un palier hydrodynamique est alimenté avec des pressions « faibles » (usuellement inférieures à 10 bars). La rotation du palier permet de faire monter en pression le coin d'huile et de séparer les satellites et les paliers. Chaque palier est monté sur un des axes du porte-satellites 23 et tous les axes sont positionnés les uns par rapport aux autres à l'aide d'un ou plusieurs châssis structurels du porte-satellites 23. Chaque satellite 22 engrène avec des dentures externes du solaire 21 et des dentures internes de la couronne externe 24. Les dentures internes de la couronne externe 24 peuvent être droites (parallèle à l'axe longitudinal), hélicoïdales ou en chevron.

Il existe un nombre d'axes et de paliers égal au nombre de satellites. Pour des raisons de fonctionnement, de montage, de fabrication, de contrôle, de réparation ou de rechange les axes et le châssis peuvent être séparés en plusieurs pièces.

Pour les mêmes raisons citées précédemment, la denture d'un réducteur 20 peut être séparée en plusieurs hélices.

Toujours en référence à la figure 3, la couronne externe 24 est séparée en deux demi-couronnes 24a, 24b :
- Une demi-couronne avant 24a constituée d'une jante 24aa et d'une demi-bride radiale avant de fixation 24ab. Sur la jante 24aa se trouve l'hélice avant de la denture du réducteur. Cette hélice avant engrène avec celle du satellite 22 qui engrène avec celle du solaire 21.
- Une demi-couronne arrière 24b constituée d'une jante 24ba et d'une demi-bride radiale arrière de fixation 24bb. Sur la jante se trouve l'hélice arrière de la denture du réducteur. Cette hélice arrière engrène avec celle du satellite 22 qui engrène avec celle du solaire 21.

La demi-bride de fixation 24ab de la demi-couronne 24a avant et la demi-bride de fixation 24b de la demi-couronne arrière 24b forment une première bride de fixation 25 de la couronne. La bride de fixation 25 est annulaire et s'entend radialement vers l'extérieur.

Avantageusement, et non limitativement, et comme cela est visible sur la figure 3, les demi-couronnes sont séparées au niveau d'un plan médian et les brides avant et arrière présentent une surface interne de part et d'autre de ce plan médian ou confondu avec ce plan médian. Cela permet de centrer la couronne également.

Bien entendu, la couronne externe 24 peut être formée d'une seule pièce. Dans ce cas, la couronne externe 24 comprend une (unique) première bride de fixation 25 annulaire qui s'étend radialement vers l'extérieur.

La couronne externe 24 du réducteur 20 de type planétaire peut présenter cette même configuration en deux demi-couronnes ou être formée d'une seule pièce (venue de matière).

Toujours en référence à la figure 3, un porte-couronne 26 relie la couronne externe 24 au carter 16 de la turbomachine. Le porte-couronne 26 permet de transférer le couple du réducteur de vitesse 20 au carter de la turbomachine. Le porte-couronne 26 permet en outre de centrer la couronne externe 24 de manière non limitative. Le porte-couronne 26 est de manière avantageuse annulaire et centré sur l'axe de la turbomachine. A cet effet, le porte-couronne 26 comprend à une première extrémité 26a une deuxième bride de fixation 27. Cette dernière s'étend dans le présent exemple radialement vers l'intérieur. De manière alternative, la deuxième bride de fixation 27 du porte couronne 26 s'étend radialement vers l'extérieur.

Le porte-couronne 26 comprend avantageusement à une deuxième extrémité 26b une bride de liaison 43 qui est destinée à être fixée à une pièce de fixation du stator (tel que le carter 16) de la turbomachine.

De manière avantageuse, le porte-couronne 26 comprend des moyens de souplesse 28 qui sont configurés de manière à d'une part, limiter les surcharges dans la turbomachine dues aux déplacements de certains organes de celle-ci et/ou du réducteur de vitesse 20, et d'autre part, obtenir une répartition uniforme et stable des charges dynamiques. Dans le présent exemple, les moyens de souplesse 28 comprennent au moins un soufflet. Le porte-couronne 26 comprend une portion munie de plusieurs soufflets.

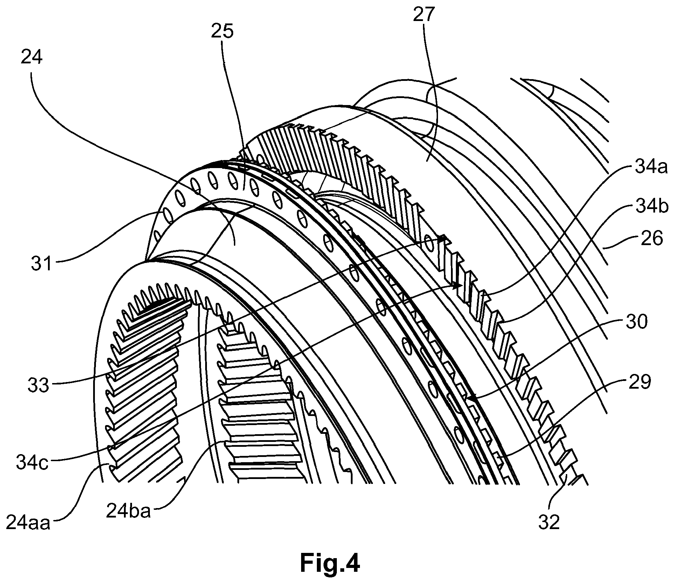

En référence aux figures 4, 5 et 6, la première bride de fixation 25 de la couronne 24 coopère avec la deuxième bride de fixation 27 du porte-couronne 26. La première bride de fixation 25 et la deuxième bride de fixation 27 forment un ensemble de fixation. De manière avantageuse, la bride de fixation 27 du porte-couronne 26 et la bride de fixation 25 de la couronne 24 sont couplées l'une à l'autre par un accouplement à dentures de type « curvic coupling ». Une telle configuration offre d'une part, une capacité du passage d'effort supérieure à celle des brides qui sont vissées, et d'autre part, un gain de masse en allégeant le nombre de moyens de fixation.

L'accouplement à dentures de type « curvic coupling » est applicable entre les brides des pièces fixes que sont la couronne 24 et le porte-couronne 26 du réducteur de vitesse de type épicycloïdal mais également entre les brides des pièces mobiles que sont la couronne 24 et le porte-couronne 26 du réducteur de vitesse de type planétaire.

L'accouplement à dentures doit tenir compte des efforts à faire transiter, de l'évacuation d'un lubrifiant du réducteur de vitesse généralement situé au niveau de la bride de la couronne 24 et de la fixation des brides d'un ou de différents organes du réducteur ou de la turbomachine. Plus précisément, il doit y avoir suffisamment de dents pour le passage des efforts tout en laissant de la place pour les perçages ou trous destinés aux évacuations du lubrifiant et des organes de fixations entre les pièces.

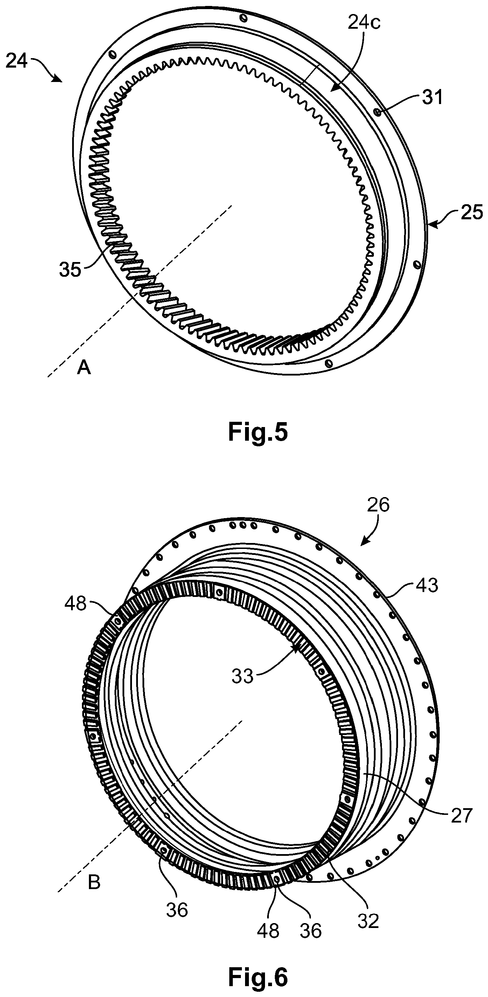

En référence à la figure 5, la couronne (ou les deux demi-couronnes) 24 comprend un axe de révolution A qui est coaxial à l'axe de la turbomachine. La première bride de fixation 25 s'étend radialement depuis une surface radialement externe 24c. La surface radiale interne opposée comprend des hélices 35 qui engrènent avec les dents des satellites 22.

En référence aux figures 4 à 6, la première bride de fixation 25 de la couronne 24 comprend une première série de dents 29 (visible plus précisément sur la figure 4). Suivant l'exemple illustré, les dents 29 sont réparties régulièrement autour de l'axe longitudinal X. Comme nous pouvons le voir également sur cet exemple, les dents 29 s'étendent suivant l'axe longitudinal en saillie depuis une première face radiale 30 de la première bride de fixation 25. En particulier, dans le cas des deux demi-couronnes, la demi-bride de fixation 24bb comprend la première face radiale 30 pourvue des dents 29. La première face radiale 30 délimite le fond des creux se trouvant entre chaque dent 29.

De manière avantageuse, mais non limitativement, chaque dent axiale d'accouplement 29 s'étend sur toute la hauteur de la première bride de fixation 25 radialement. De manière avantageuse, les dents 29 sont droites. Bien entendu, les dents 29 pourraient présenter une autre forme telle que par exemple trapézoïdale.

De manière avantageuse, mais non limitativement, la première bride de fixation 25 comprend des orifices 31 qui présentent chacun un axe parallèle à l'axe longitudinal. Les orifices 31 sont régulièrement espacés autour de l'axe longitudinal. Le nombre d'orifices est inférieur au nombre de dents 29. Les orifices 31 sont agencés entre un nombre prédéterminé de dents 29. Suivant une caractéristique avantageuse, le nombre des orifices est compris entre 5 et 10. Sur l'exemple illustré, il y a sept orifices 31 qui sont placés entre sept ensembles de dents. A titre d'exemple, il y a quatorze dents dans chaque ensemble de dents 29.

En référence à la figure 6, la deuxième bride de fixation 27 du porte couronne 26 comprend une deuxième série de dents axiales d'accouplement complémentaires 32 à la première série de dents 29. Les dents 29 et dents complémentaires 32 sont orientées les unes en regard des autres. Les dents sont en particulier destinées à s'engager les unes dans les autres. De la sorte, les dents complémentaires 32 sont disposées autour de l'axe longitudinal et s'étendent axialement en saillie depuis une face radiale 33 de la deuxième bride de fixation 27 du porte-couronne 26. En d'autres termes, les dents 29 et dents complémentaires 32 s'étendent suivant l'axe longitudinal (ce sont des dents axiales). Les dents complémentaires 32 s'étendent également sur toute la hauteur de la deuxième bride de fixation 27.

Les dents et les dents complémentaires 32 sont agencées au contact les unes des autres pour transmettre un couple vers le stator de la turbomachine (dans le cas où le réducteur de vitesse est épicycloïdal).

Sur la figure 4 en particulier, dans le présent exemple, chaque dent 29 et dent complémentaire 32 comprend deux pans 34a, 34b qui s'étendant suivant l'axe longitudinal et qui sont en contact les uns des autres. Les pans 34a, 34b sont reliés par une face 34c définie dans un plan perpendiculaire à l'axe longitudinal. Les pans 34a, 34b présentent une longueur suivant l'axe longitudinal qui est identique dans le présent exemple.

Comme nous pouvons le voir également sur les figures 4 et 6, la deuxième bride de fixation 27 du porte-couronne 26 comprend des deuxièmes orifices 36 qui traversent la paroi de celle-ci de part et d'autre suivant l'axe longitudinal. Les deuxièmes orifices 36, axiaux, sont destinés à coopérer avec les premiers orifices 31 de couronne 24. En situation d'installation, les premiers et deuxièmes orifices 31, 36 sont l'un en regard de l'autre. Le nombre des deuxièmes orifices est identique à celui des premiers orifices 31.

Suivant encore une autre caractéristique avantageuse, chaque orifice 36 traverse une dent de fixation 48 comme illustré précisément sur la figure 6. La première et/ou la deuxième bride(s) de fixation 25, 27 comprennent des dents de fixation 48. Les dents de fixation 48 sont réparties régulièrement autour de l'axe longitudinal X. Chaque dent de fixation comprend une hauteur de dent mesurée radialement vis-à-vis de l'axe longitudinal. Chaque dent de fixation 48 présente une largeur suivant une direction circonférentielle qui est supérieure à celle des dents d'accouplement complémentaires 32. Autrement dit, la largeur de la dent de fixation est mesurée dans une direction transverse à la hauteur de la dent. La largeur de chaque dent de fixation 48 est adaptée en fonction des dimensions des organes de fixation décrits ci-après. Les dents de fixation peuvent être reçues dans des renfoncements de forme complémentaire et formés dans l'une ou l'autre des première et deuxième brides de fixation.

Le premier et deuxièmes orifices 31, 36 sont destinés à permettre le passage d'organes de fixation 40. En d'autres termes, les premier et deuxièmes orifices 31, 36 axiaux sont traversés par les organes de fixation 40. Les organes de fixation 40 sont avantageusement mais non limitativement des éléments filetés du type vis-écrou. Bien entendu, les organes de fixation 40 peuvent être tout élément fileté coopérant avec un élément de serrage ou tout autre organe adéquat permettent un assemblage et désassemblage aisés et sans destructions des pièces qui en sont équipées.

Les organes de fixation 40 sont agencés de manière à serrer les première et deuxième brides 25, 27 et à maintenir circonférentiellement chaque dent axiale de la première série de dents entre des dents axiales de la deuxième série de dents complémentaires. De manière avantageuse, les organes de fixation 40 comprennent des vis 41 qui s'étendent axialement et qui appliquent un effort axial pour serrer les deux brides de fixation et engager les dents.

Les vis 41 s'étendent chacune entre des dents et dents complémentaires 29, 32 adjacentes suivant la direction circonférentielle.

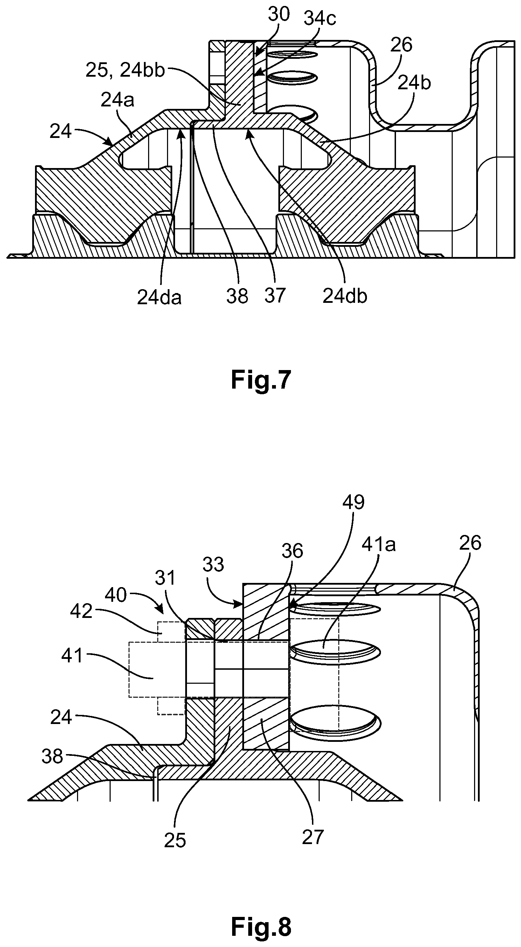

Sur la figure 7 nous voyons que la face 34c d'une dent de la première série de la première bride de fixation 25 est en contact avec la première face radiale 30 de la deuxième bride de fixation 27. Nous voyons également que la hauteur radiale de la deuxième bride de fixation 27 est égale à la hauteur radiale de la première bride de fixation 25. De manière limitative, la deuxième bride de fixation 27 présente une hauteur supérieure à celle de la première bride de fixation.

Toujours sur la figure 7, la demi-couronne 24b comprend une patte 37 qui s'étend parallèlement à l'axe longitudinal X. Dans le présent exemple, la patte 37 est annulaire. Celle-ci est imbriquée dans un évidement 38 de forme correspondante formé dans la demi-couronne avant 24a. L'évidement 38 est réalisé au niveau d'une surface radialement interne 24da de la demi-couronne avant 24a et est tourné vers l'axe longitudinal. De manière avantageuse, l'évidement 38 présente une hauteur sensiblement (plus ou moins 10 mm) égale à la hauteur de la patte 37. La hauteur est mesurée suivant l'axe radial. Avantageusement, la surface radialement interne 24da présente une continuité de surface avec une surface radialement interne 24db de la demi-couronne arrière 24b (et de la patte 37). Cela permet de faciliter le montage des demi-couronnes et de garantir la bonne position de celles-ci l'une par rapport à l'autre. De manière alternative, l'évidement 38 peut être réalisé au niveau de la surface radialement interne 24db de la demi-couronne arrière 24b et la patte portée par la demi-couronne avant 24a.

Sur la figure 8 nous voyons une vis 41 (en pointillé) qui traverse les premier et deuxième orifices 31, 36 respectivement des première et deuxième brides de fixation 25, 27. La tête 41a de la vis est plaquée contre une face aval 49 (opposée à la face radiale 30) de la deuxième bride de fixation 27. Un écrou 42 (représenté en pointillé) permettant à la vis de serrer les brides 25, 27 est monté sur la tige filetée de la vis 41 du côté de la première bride de fixation 25.

Le nombre d'organes de fixation 40 est identique au nombre des premiers et deuxièmes orifices respectivement. Avec l'accouplement à dentures, il n'est pas nécessaire d'avoir un nombre de vis important qui pourrait augmenter la masse de l'ensemble. Par rapport à des brides de fixation classiques de l'art antérieur fixées avec de nombreuses vis, nous obtenons avec l'accouplement à dentures une réduction de l'ordre de 90% du nombre de vis à utiliser.

Pour le montage, il suffit d'engager les dents 29 et dents complémentaires 32 des deux brides et de fixer les brides 25, 27 avec les vis 41 et écrous 42. Les vis restent facilement accessibles pour le démontage et montage car il n'y a pas de pièces supplémentaires venant les couvrir.

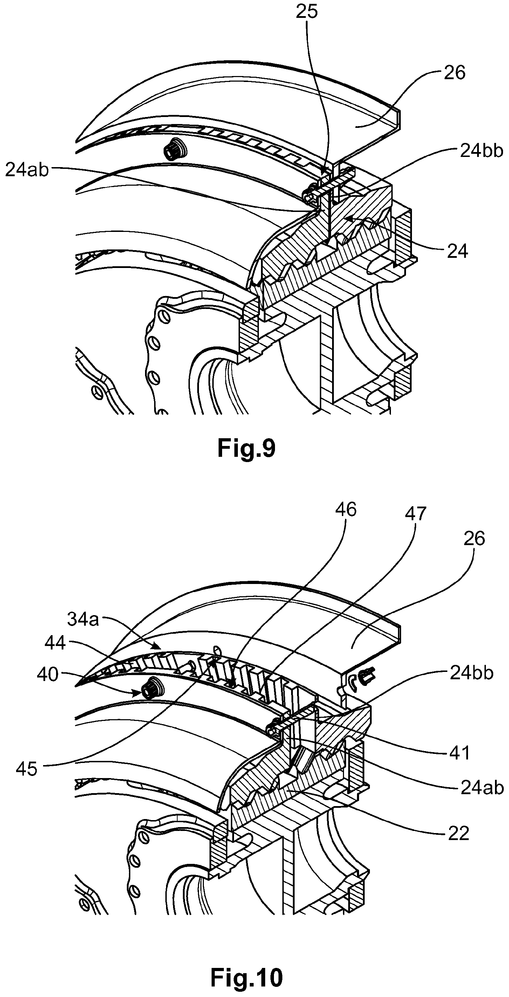

Les figures 9 à 10 illustrent un mode de réalisation de l'agencement d'un accouplement à dentures. Ce mode de réalisation diffère de celui précédemment présenté en ce que l'accouplement à dentures par dents axiales d'accouplement est agencé entre les deux demi-brides 24ab, 24bb de la couronne externe 24. La demi-bride arrière 24bb comprend une première série de dents axiales d'accouplement ici dites dents internes 44 qui s'étendent depuis une première face interne 45 suivant l'axe longitudinal X. La première face interne 45 s'étend dans un plan radial. La première face interne 45 est en regard d'une deuxième face interne 46 de la demi-bride avant 24ab. La demi-bride avant 24ab comprend une deuxième série de dents axiales d'accouplement complémentaires dites des dents complémentaires internes 47 aux dents internes 44 qui s'étendent depuis la deuxième face interne 46. Bien entendu, la demi-bride avant 24ab peut comprendre les dents et la demi-bride arrière 24bb peut comprendre les dents complémentaires. Les dents internes 44 et dents complémentaires internes 47 peuvent s'étendre sur toute la hauteur ou une partie de la hauteur des brides. Comme pour le premier mode de réalisation, d'une part les dents internes 44 s'engagent entre les dents complémentaires 47 de manière à créer un accouplement à dentures par dents axiales et d'autre part les organes de fixation 40 permettent de serrer les demi-brides avant et arrière 24ab, 24bb et de maintenir circonférentiellement chaque dent interne 44 entre des dents complémentaires 47.

Avantageusement, les dents internes 44 et dents complémentaires internes 47 sont droites mais celles-ci pourraient être de forme trapézoïdale. Dans ce mode de réalisation, la bride de fixation 27 est dépourvue de dents. Nous comprenons que la face radiale 33 de la deuxième bride de fixation 27 est sensiblement plane et//ou lisse.

Une telle configuration offre une augmentation du passage des efforts entre les brides de la couronne et permet de contenir le diamètre de la couronne ce qui évite d'impacter la masse du réducteur de vitesse. A noter que les dents permettent de faciliter le montage des deux demi-couronnes et notamment des demi-brides car les dents s'imbriquent naturellement. Cet accouplement à dentures est également plus fiable et permet d'allonger la durée de vie de la couronne par la réduction des frictions.

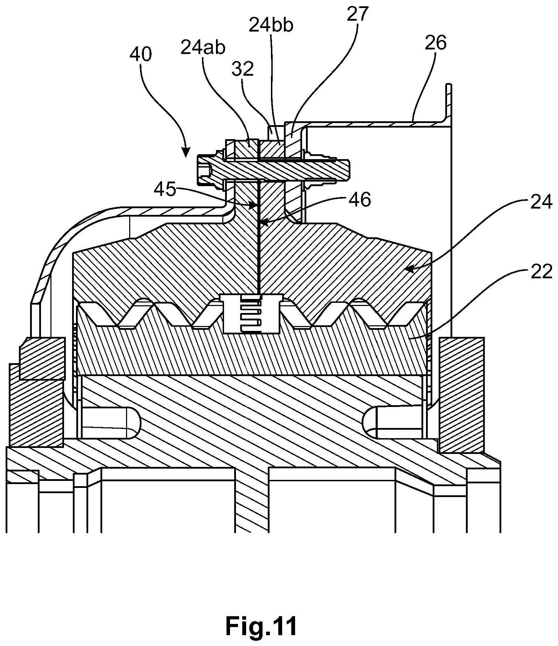

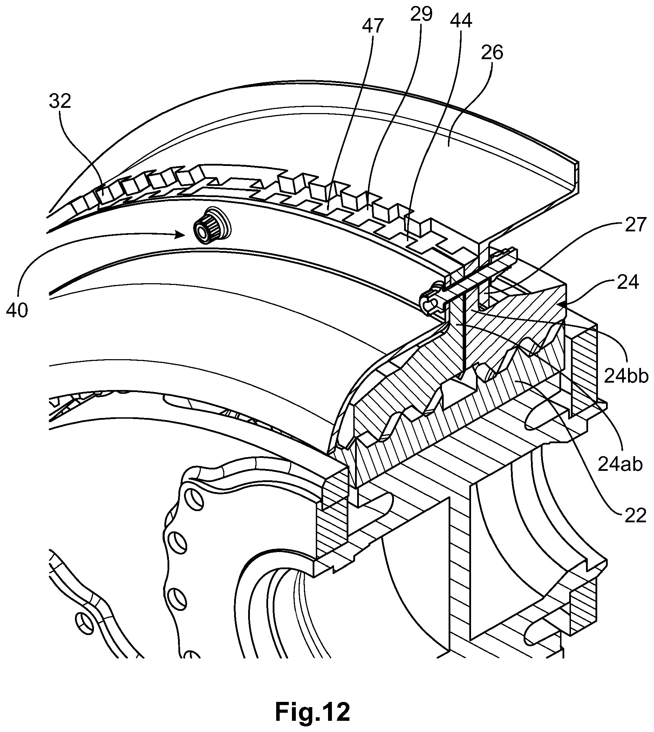

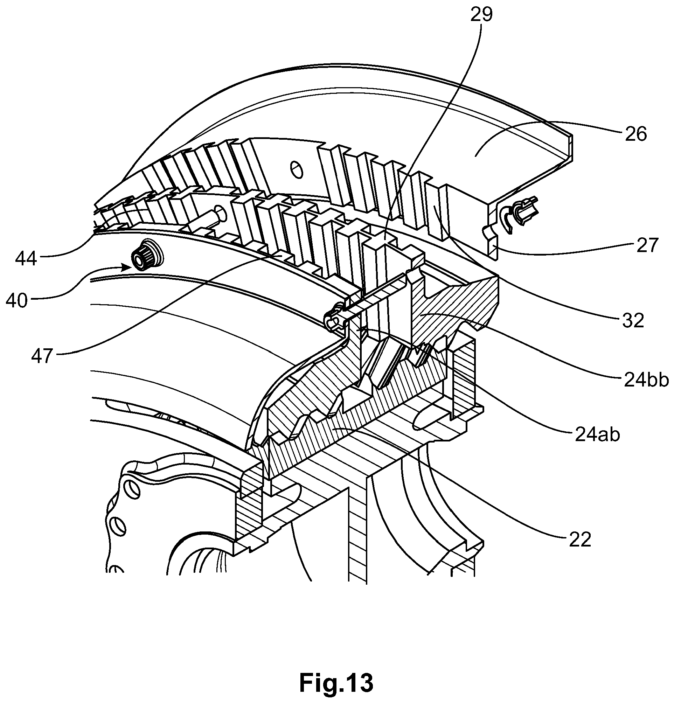

Les figures 11 à 13 illustrent encore un autre mode de réalisation de l'agencement d'au moins un accouplement à dentures par dents axiales d'accouplement comprenant une première série de dents axiales d'accouplement destinées à s'engager avec une deuxième série de dents axiales d'accouplement complémentaires. Dans ce mode de réalisation, il y a un accouplement à dentures entre les demi-brides 24ab, 24bb de la couronne 24 et un accouplement à dentures entre la bride de la couronne 24 et la bride de fixation 27 du porte-couronne 26. En particulier, la deuxième bride de fixation 27 comprend les dents complémentaires 32 qui s'engagent entre les dents 29 de la demi-bride arrière 24bb de la couronne 24 et les dents internes 44 de la demi-bride 24bb s'engagent entre les dents complémentaires internes 47 de la demi-bride 24ab. Une telle configuration permet de multiplier le passage des efforts qui transitent entre les différentes brides. Il est possible d'augmenter les capacités de passage de couple sans impacter le diamètre des différents éléments. L'accouplement entre la couronne et le port-couronne est également plus fiable (moins de friction et mois d'usure).

## Revendications

1. Réducteur de vitesse (20) pour une turbomachine (1), en particulier pour aéronef, présentant un axe longitudinal X, le réducteur de vitesse comprenant un pignon solaire (21), des pignons satellites (22), une couronne externe (24) et un porte couronne fixé à la couronne externe (24), les pignons satellites (22) étant en prise d'une part avec le pignon solaire (21) et d'autre part avec la couronne externe (24), et la couronne externe (24) comportant une première bride fixation (25) s'étendant radialement vers l'extérieur et étant fixée à une deuxième bride de fixation (27) du porte couronne (26) par des organes de fixation (40), la première bride de fixation (25) et la deuxième bride de fixation (27) formant un ensemble de fixation **caractérisé en ce que** l'ensemble de fixation comprend au moins un accouplement à dentures par dents axiales d'accouplement comprenant une première série de dents axiales d'accouplement (29, 44, 47) s'engageant avec une deuxième série de dents axiales d'accouplement complémentaires (32, 47, 44), les organes de fixation (40) étant agencés de manière à serrer entre elles les première et deuxième brides de fixation (25, 27) et maintenir circonférentiellement chaque dent de la première série de dents axiales d'accouplement (32) entre deux dents de la deuxième série de dents axiales d'accouplement complémentaires (44).

2. Réducteur de vitesse (20) selon la revendication 1, **caractérisé en ce que** la couronne externe (24) est formée d'une demi-couronne avant (24a) et d'une demi-couronne arrière (24b), la demi-couronne avant (24a) comprenant une demi-bride radiale avant (24ab) et la demi-couronne arrière (24b) comprenant une demi-bride radiale arrière (24bb), la demi-bride radiale avant (24ab) et la demi-bride radiale arrière (24bb) formant la première bride de fixation (25), la demi-bride radiale arrière (24bb) de la demi-couronne arrière (24b) étant reliée à la deuxième bride de fixation (27) par un accouplement à dentures par dents axiales d'accouplement, la demi-bride radiale arrière (24bb) de la demi-couronne arrière (24b) comprenant la première série de dents axiales d'accouplement (29) et la deuxième bride de fixation (27) comprenant la deuxième série de dents axiales d'accouplement complémentaires (32).

3. Réducteur de vitesse (20) selon l'une des revendications précédentes, **caractérisé en ce que** la couronne externe (24) est formée d'une demi-couronne avant (24a) et d'une demi-couronne arrière (24b), la demi-couronne avant (24a) comprenant une demi-bride radiale avant (24ab) et la demi-couronne arrière (24b) comprenant une demi-bride radiale arrière (24bb), la demi-bride radiale avant (24ab) et la demi-bride radiale arrière (24bb) formant la première bride de fixation (25), les demi-brides radiales avant et arrière (24ab, 24bb) étant reliées entre elles par un accouplement à dentures par dents axiales, une des demi-brides radiales avant et arrière (24ab, 24bb) comprenant la première série de dents d'accouplement axiales (44, 47) et l'autre des brides radiales avant et arrière (24ab, 24bb) comprenant la deuxième série de dents d'accouplement axiales complémentaires (44, 47).

4. Réducteur de vitesse (20) selon l'une des revendications précédentes, **caractérisé en ce que** la première bride de fixation (25) et la deuxième bride de fixation (27) comprennent respectivement des premiers et deuxièmes orifices de fixation (31, 36) axiaux traversés par les organes de fixation (40), les premiers et deuxièmes orifices de fixation (31, 36) axiaux étant agencés circonférentiellement autour de l'axe longitudinal X.

5. Réducteur de vitesse (20) selon la revendication précédente, **caractérisé en ce que** les organes de fixation (40) comprennent des vis (41) axiales ou des boulons axiaux traversant les premiers et deuxièmes orifices de fixation (31, 36).

6. Réducteur de vitesse (20) selon la revendication 4 ou 5, **caractérisé en ce que** plusieurs dents de la première ou deuxième série de dents axiales d'accouplement (32, 44) sont agencées entre deux premiers ou deuxième orifices de fixation (31, 36) circonférentiellement adjacent autour de l'axe longitudinal X, le nombre de premiers ou deuxièmes orifices de fixation (31, 36) étant compris entre 5 et 10.

7. Réducteur de vitesse (20) selon l'une quelconque des revendications précédentes, **caractérisé en ce que** le porte couronne (26) comprend un soufflet.

8. Réducteur de vitesse (20) selon l'une quelconque des revendications 4 à 6 ou la revendication 7 lorsqu'elle est dépendante d'une des revendications 4 à 6, **caractérisé en ce que** la première bride (25) et la deuxième bride (27) comprennent chacune des dents axiales de fixation (48) qui sont traversées par les orifices de fixation (31, 36) recevant des organes de fixation (40).

9. Réducteur de vitesse (20) selon la revendication précédente, **caractérisé en ce que** les dents axiales de fixation (48) présentent, d'une part, une hauteur de dent mesurée radialement vis-à-vis de l'axe longitudinal X, et d'autre part, une largeur de dent mesurée dans une direction transverse à la hauteur de dent, la largeur de chacune des dents axiales de fixation étant supérieure à la largeur de dent des dents axiales d'accouplement (32, 44).

10. Réducteur de vitesse (20) selon l'une des revendications précédentes, **caractérisé en ce que** les dents axiales d'accouplement (29, 32, 44, 47) s'étendent sur toute la hauteur radiale des première et deuxième brides de fixation (25, 27).

11. Réducteur de vitesse (20) selon la revendication 2 ou 3 ou l'une quelconque des revendications 4 à 10 lorsqu'elles sont dépendantes des revendications 2 ou 3, **caractérisé en ce qu'**une des demi-couronnes avant et arrière (24a, 24b) comprend une patte (37) s'étendant suivant l'axe longitudinal et logée dans un évidement (38) de forme complémentaire de l'autre des demi-couronnes avant et arrière (24a, 24b).

12. Réducteur de vitesse (20) selon l'une des revendications précédentes, **caractérisé en ce que** l'ensemble de fixation comprend des perçages ou trous destinés aux évacuations d'un lubrifiant et des organes de fixations entre les pièces.

13. Turbomachine (1), en particulier pour aéronef, présentant un axe longitudinal X, et comprenant un réducteur de vitesse (20) selon l'une quelconques des revendications précédentes.

14. Turbomachine selon la revendication précédente, **caractérisée en ce que** la couronne externe (24) est reliée à un carter de la turbomachine et est immobile en rotation par rapport à l'axe longitudinal.

15. Turbomachine selon la revendication 13, **caractérisée en ce que** la couronne externe (24) est reliée à un arbre de la turbomachine et est mobile en rotation autour de l'axe longitudinal.

## Patentansprüche

1. Getriebe (20) für ein Turbotriebwerk (1), insbesondere für ein Luftfahrzeug, mit einer Längsachse X, wobei das Getriebe ein Sonnenrad (21), Planetenräder (22), ein Hohlrad (24) und einen am Hohlrad (24) befestigten Hohlradträger umfasst, wobei die Planetenräder (22) einerseits mit dem Sonnenrad (21) und andererseits mit dem Hohlrad (24) im Eingriff stehen, und wobei das Hohlrad (24) einen ersten Befestigungsflansch (25) aufweist, der sich radial nach außen erstreckt und mittels Befestigungselementen (40) an einem zweiten Befestigungsflansch (27) des Hohlradträgers (26) befestigt ist, wobei der erste Befestigungsflansch (25) und der zweite Befestigungsflansch (27) eine Befestigungsbaugruppe bilden, **dadurch gekennzeichnet, dass** die Befestigungsbaugruppe mindestens eine Zahnkupplung mit axialen Kupplungsverzahnungen umfasst, die eine erste Reihe von axialen Kupplungszähnen (29, 44, 47) aufweist, die in eine zweite Reihe von komplementären axialen Kupplungszähnen (32, 47, 44) eingreifen, wobei die Befestigungselemente (40) so angeordnet sind, dass sie den ersten und zweiten Befestigungsflansch (25, 27) miteinander verspannen und dabei jeden Zahn der ersten Reihe von axialen Kupplungszähnen (32) in Umfangsrichtung zwischen zwei Zähnen der zweiten Reihe von komplementären axialen Kupplungszähnen (44) halten.

2. Getriebe (20) nach Anspruch 1, **dadurch gekennzeichnet, dass** das Hohlrad (24) aus einer vorderen Hohlradhälfte (24a) und einer hinteren Hohlradhälfte (24b) gebildet ist, wobei die vordere Hohlradhälfte (24a) einen vorderen radialen Teilflansch (24ab) und die hintere Hohlradhälfte (24b) einen hinteren radialen Teilflansch (24bb) aufweist, wobei der vordere radiale Teilflansch (24ab) und der hintere radiale Teilflansch (24bb) den ersten Befestigungsflansch (25) bilden, wobei der hintere radiale Teilflansch (24bb) der hinteren Hohlradhälfte (24b) mit dem zweiten Befestigungsflansch (27) durch eine Zahnkupplung mit axialen Kupplungsverzahnungen verbunden ist, wobei der hintere radiale Teilflansch (24bb) der hinteren Hohlradhälfte (24b) die erste Reihe von axialen Kupplungszähnen (29) und der zweite Befestigungsflansch (27) die zweite Reihe von komplementären axialen Kupplungszähnen (32) aufweist.

3. Getriebe (20) nach einem der vorstehenden Ansprüche, **dadurch gekennzeichnet, dass** das Hohlrad (24) aus einer vorderen Hohlradhälfte (24a) und einer hinteren Hohlradhälfte (24b) gebildet ist, wobei die vordere Hohlradhälfte (24a) einen vorderen radialen Teilflansch (24ab) und die hintere Hohlradhälfte (24b) einen hinteren radialen Teilflansch (24bb) aufweist, wobei der vordere radiale Teilflansch (24ab) und der hintere radiale Teilflansch (24bb) den ersten Befestigungsflansch (25) bilden, wobei die vorderen und hinteren radialen Teilflansche (24ab, 24bb) durch eine Zahnkupplung mit axialen Verzahnungen miteinander verbunden sind, wobei einer der vorderen und hinteren radialen Teilflansche (24ab, 24bb) die erste Reihe von axialen Kupplungszähnen (44, 47) und der andere der vorderen und hinteren radialen Teilflansche (24ab, 24bb) die zweite Reihe von komplementären axialen Kupplungszähnen (44, 47) aufweist.

4. Getriebe (20) nach einem der vorstehenden Ansprüche, **dadurch gekennzeichnet, dass** der erste Befestigungsflansch (25) und der zweite Befestigungsflansch (27) jeweils erste bzw. zweite axiale Befestigungsöffnungen (31, 36) aufweisen, die von den Befestigungselementen (40) durchdrungen werden, wobei die ersten und zweiten axialen Befestigungsöffnungen (31, 36) umfangsumfassend um die Längsachse X angeordnet sind.

5. Getriebe (20) nach dem vorstehenden Anspruch, **dadurch gekennzeichnet, dass** die Befestigungselemente (40) axiale Schrauben (41) oder axiale Bolzen umfassen, die die ersten und zweiten Befestigungsöffnungen (31, 36) durchqueren.

6. Getriebe (20) nach Anspruch 4 oder 5, **dadurch gekennzeichnet, dass** mehrere Zähne der ersten oder zweiten Reihe von axialen Kupplungszähnen (32, 44) zwischen zwei in Umfangsrichtung benachbarten ersten oder zweiten Befestigungsöffnungen (31, 36) um die Längsachse X angeordnet sind, wobei die Anzahl der ersten oder zweiten Befestigungsöffnungen (31, 36) zwischen 5 und 10 liegt.

7. Getriebe (20) nach einem der vorstehenden Ansprüche, **dadurch gekennzeichnet, dass** der Hohlradträger (26) einen Balg umfasst.

8. Getriebe (20) nach einem der Ansprüche 4 bis 6 oder Anspruch 7, sofern er in Abhängigkeit von einem der Ansprüche 4 bis 6 ausgestaltet ist, **dadurch gekennzeichnet, dass** der erste Flansch (25) und der zweite Flansch (27) jeweils axiale Befestigungszähne (48) aufweisen, die von den Befestigungsöffnungen (31, 36) durchdrungen werden, welche Befestigungselemente (40) aufnehmen.

9. Getriebe (20) nach dem vorstehenden Anspruch, **dadurch gekennzeichnet, dass** die axialen Befestigungszähne (48) eine in radialer Richtung zur Längsachse X gemessene Zahnhöhe und eine in einer zur Zahnhöhe transversalen Richtung gemessene Zahnbreite aufweisen, wobei die Zahnbreite jedes axialen Befestigungszahnes größer ist als die Zahnbreite der axialen Kupplungszähne (32, 44).

10. Getriebe (20) nach einem der vorhergehenden Ansprüche, **dadurch gekennzeichnet, dass** sich die axialen Kupplungszähne (29, 32, 44, 47) über die gesamte radiale Höhe des ersten und zweiten Befestigungsflansches (25, 27) erstrecken.

11. Getriebe (20) nach Anspruch 2 oder 3 oder einem der Ansprüche 4 bis 10, sofern sie in Abhängigkeit von Anspruch 2 oder 3 ausgestaltet sind, **dadurch gekennzeichnet, dass** eine der vorderen und hinteren Hohlradhälften (24a, 24b) eine Lasche (37) aufweist, der sich entlang der Längsachse erstreckt und in einer Aussparung (38) mit komplementärer Form in der anderen der vorderen und hinteren Hohlradhälften (24a, 24b) untergebracht ist.

12. Getriebe (20) nach einem der vorstehenden Ansprüche, **dadurch gekennzeichnet, dass** die Befestigungsbaugruppe Bohrungen oder Löcher zum Abführen eines Schmiermittels und Befestigungselemente zwischen den Werkstücken aufweist.

13. Turbotriebwerk (1), insbesondere für ein Luftfahrzeug, mit einer Längsachse X und umfassend ein Getriebe (20) nach einem der vorstehenden Ansprüche.

14. Turbotriebwerk nach dem vorstehenden Anspruch, **dadurch gekennzeichnet, dass** das Hohlrad (24) mit einem Gehäuse des Turbotriebwerks verbunden und in Bezug auf die Längsachse drehfest ist.

15. Turbotriebwerk nach Anspruch 13, **dadurch gekennzeichnet, dass** das Hohlrad (24) mit einer Welle des Turbotriebwerks verbunden und um die Längsachse drehbar ist.

## Claims

1. A speed reducer (20) for a turbomachine (1), in particular for an aircraft, having a longitudinal axis X, the speed reducer comprising a sun gear sprocket (21), planet gear sprockets (22), an external ring gear (24), and a ring gear carrier attached to the external ring gear (24), the planet gear sprockets (22) being in mesh on the one hand with the sun gear sprocket (21) and on the other hand with the external ring gear (24), and the external ring gear (24) comprising a first attachment flange (25) extending radially outwards and being attached to a second attachment flange (27) of the ring gear carrier (26) by attachment members (40), the first attachment flange (25) and the second attachment flange (27) forming an attachment assembly, **characterised in that** the attachment assembly comprises at least one gear coupling with axial coupling teeth comprising a first series of axial coupling teeth (29, 44, 47) engaging with a second series of complementary axial coupling teeth (32, 47, 44), the attachment members (40) being arranged so as to clamp the first and second attachment flanges (25, 27) together and circumferentially hold each tooth of the first series of axial coupling teeth (32) between two teeth of the second series of complementary axial coupling teeth (44).

2. The speed reducer (20) according to claim 1, **characterised in that** the external ring gear (24) consists of a front half-ring gear (24a) and a rear half-ring gear (24b), the front half-ring gear (24a) comprising a front radial half-flange (24ab) and the rear half-ring gear (24b) comprising a rear radial half-flange (24bb), the front radial half-flange (24ab) and the rear radial half-flange (24bb) forming the first attachment flange (25), the rear radial half-flange (24bb) of the rear half-ring gear (24b) being connected to the second attachment flange (27) by a gear coupling with axial coupling teeth, the rear radial half-flange (24bb) of the rear half-ring gear (24b) comprising the first series of axial coupling teeth (29) and the second attachment flange (27) comprising the second series of complementary axial coupling teeth (32).

3. The speed reducer (20) according to one of the preceding claims, **characterised in that** the external ring gear (24) is formed by a front half-ring gear (24a) and a rear half-ring gear (24b), the front half-ring gear (24a) comprising a front radial half-flange (24ab) and the rear half-ring gear (24b) comprising a rear radial half-flange (24bb), the front radial half-flange (24ab) and the rear radial half-flange (24bb) forming the first attachment flange (25), the front and rear radial half-flanges (24ab, 24bb) being connected together by a gear coupling with axial coupling teeth, one of the front and rear radial half-flanges (24ab, 24bb) comprising the first series of axial coupling teeth (44, 47) and the other of the front and rear radial flanges (24ab, 24bb) comprising the second series of complementary axial coupling teeth (44, 47).

4. The speed reducer (20) according to one of the preceding claims, **characterised in that** the first attachment flange (25) and the second attachment flange (27) respectively comprise first and second axial attachment orifices (31, 36) through which the attachment members (40) pass, the first and second axial attachment orifices (31, 36) being arranged circumferentially around the longitudinal axis X.

5. The speed reducer (20) according to the preceding claim, **characterised in that** the attachment members (40) comprise axial screws (41) or axial bolts passing through the first and second attachment orifices (31, 36).

6. The speed reducer (20) according to claim 4 or 5, **characterised in that** several teeth of the first or second series of axial coupling teeth (32, 44) are arranged between two circumferentially adjacent first or second attachment orifices (31, 36) around the longitudinal axis X, the number of first or second attachment orifices (31, 36) being between 5 and 10.

7. The speed reducer (20) according to any one of the preceding claims, **characterised in that** the ring gear carrier (26) comprises a bellow.

8. The speed reducer (20) according to any one of claims 4 to 6 or to claim 7 when it depends to any one of claims 4 to 6, **characterised in that** the first flange (25) and the second flange (27) each comprise axial attachment teeth (48) which are passed through by attachment orifices (31, 36) receiving attachment members (40).

9. The speed reducer (20) according to the preceding claim, **characterised in that** the axial attachment teeth (48) have, on the one hand, a tooth height measured radially with respect to the longitudinal axis X and, on the other hand, a tooth width measured in a direction transverse to the tooth height, the width of each of the axial attachment teeth being greater than the tooth width of the axial coupling teeth (32, 44).

10. The speed reducer (20) according to one of the preceding claims, **characterised in that** the axial coupling teeth (29, 32, 44, 47) extend over the entire radial height of the first and second attachment flanges (25, 27).

11. The speed reducer (20) according to claim 2 or 3 or any one of claims 4 to 10 when they are dependent on claims 2 or 3, **characterised in that** one of the front and rear half-ring gears (24a, 24b) comprises a leg (37) extending along the longitudinal axis and housed in a recess (38) of complementary shape to the other of the front and rear half-ring gears (24a, 24b).

12. The speed reducer (20) according to one of the preceding claims, **characterised in that** the attachment assembly comprises piercings or holes intended for the evacuation of a lubricant and attachment members between the parts.

13. A turbomachine (1), in particular for an aircraft, having a longitudinal axis X, and comprising a speed reducer (20) according to any one of the preceding claims.

14. The turbomachine as claimed above, **characterised in that** the external ring gear (24) is connected to a casing of the turbomachine and is unmovable in rotation relative to the longitudinal axis.

15. The turbomachine as claimed in claim 13, **characterised in that** the external ring gear (24) is connected to a shaft of the turbomachine and is movable in rotation about the longitudinal axis.
